# EUROPEAN PATENT APPLICATION

(11) **EP 4 502 555 A1**
(43) Date of publication of application: **05.02.2025**
(21) Application number: 23778984.7
(22) Date of filing: 16.02.2023
(51) Int. Cl.: G01F 3/22

(54) **GAS METER AND GAS METER POWER CONSUMPTION MANAGEMENT SYSTEM**

(30) Priority: 29.03.2022 JP 2022053397
(71) Applicant: Panasonic Intellectual Property Management Co., Ltd., Kadoma-shi, Osaka 571-0057 (JP)
(72) Inventor: UCHIMURA, Kazuya, Osaka 571-0057 (JP); YOKOHATA, Mitsuo, Osaka 571-0057 (JP)
(74) Representative: SSM Sandmair
(86) International application number: PCT/JP2023/005503
(87) International publication number: WO 2023/188954

(57) **Abstract**

A gas meter is a gas meter located at each of consumer's places. The gas meter includes: an acceleration sensor that detects acceleration; a controller; and a battery that supplies electric power to the acceleration sensor and the controller. Based on the acceleration detected by the acceleration sensor, the controller changes from a normal mode to at least one calculation mode in which power consumption of the battery is larger than power consumption of the battery in the normal mode. When an integrated value of a value related to the power consumption exceeds a predetermined assumed integrated value, the controller outputs a warning signal.

## Description

### Technical Field

The present invention relates to a gas meter and a gas meter power consumption management system.

### Background Art

Conventionally known is a seismic sensor that operates in a power saving mode or a calculation mode that is larger in power consumption than the power saving mode (PTL 1). According to this seismic sensor, when it is determined based on acceleration measured by an acceleration measurer that an earthquake has occurred, the power saving mode is changed to the calculation mode in which an earthquake index value is calculated based on the acceleration. In contrast, when it is determined that the earthquake has not occurred, the power saving mode is maintained. Thus, an operating mode can be prevented from being the calculation mode at all times, and this contributes to a reduction in power consumption.

### Citation List

### Patent Literature

PTL 1: Japanese Patent No. 6,666,023

### Summary of Invention

### Technical Problem

However, since the gas meter is located outdoors, the gas meter is influenced by many noises caused due to, for example, vibrations generated when an automobile, a train, or the like passes, vibrations generated by a rainstorm, resonant vibrations generated when gas flows through a gas channel, or the like. Therefore, due to changes in the acceleration based on these unexpected vibrations, the power saving mode is repeatedly changed to the measurement mode in some cases. As a result, the power consumption becomes large in some cases. Thus, a battery of the gas meter unexpectedly runs out, and the gas meter becomes inoperative in some cases.

An object of the present invention is to provide a gas meter and a gas meter power consumption management system each of which can be prevented from becoming inoperative.

### Solution to Problem

A gas meter of the present invention is a gas meter located at each of consumer's places. The gas meter includes: an acceleration sensor that detects acceleration; a controller; and a battery that supplies electric power to the acceleration sensor and the controller. Based on the acceleration detected by the acceleration sensor, the controller changes from a normal mode to at least one calculation mode in which power consumption of the battery is larger than power consumption of the battery in the normal mode. When an integrated value of a value related to the power consumption exceeds a predetermined assumed integrated value, the controller outputs a warning signal.

According to the present invention, when the acceleration detected by the acceleration sensor is a predetermined value or more, the normal mode is changed to the calculation mode, and the earthquake index value is calculated based on the acceleration in the calculation mode. The power consumption of the battery in the calculation mode is larger than that in the normal mode. When the acceleration detected by the acceleration sensor often becomes the predetermined value or more by many noises caused due to, for example, vibrations generated when an automobile, a train, or the like passes, the number of times of the change to the calculation mode increases. In this case, when the integrated value of the value related to the power consumption exceeds the assumed integrated value, the warning signal is output to, for example, the center server. Therefore, the center server can find at an early stage the gas meter in which the power consumption is large, and therefore, the battery is likely to run out at an early timing in the future. Thus, the battery of the gas meter can be prevented from unexpectedly running out, and the gas meter can be prevented from becoming inoperative.

In the above invention, when an integrated value of an operating time of the controller in the at least one calculation mode as the integrated value exceeds a predetermined assumed integrated operating time as the assumed integrated value, the controller may output the warning signal.

According to the above configuration, the battery of the gas meter can be prevented from unexpectedly running out since the power consumption increases by the increase in the operating time.

In the above invention, the gas meter may further include: a measurer that is located on a channel through which gas to be supplied to a gas appliance located at the consumer's place flows, the measurer measuring a flow rate of the gas flowing through the channel; a blocker that switches the channel from an open state where the gas is allowed to flow through the channel to a closed state where the flow of the gas in the channel is blocked; and a storage that stores a threshold of the integrated value of the operating time of the controller. When the integrated value of the operating time of the controller in the calculation mode reaches the threshold, the controller may output the warning signal or switch the channel from the open state to the closed state by the blocker.

According to the above configuration, when the integrated value of the operating time of the controller in the calculation mode reaches the threshold, the warning signal is output, or the channel of the gas is blocked by the blocker. In this case, before the battery of the gas meter unexpectedly runs out, and the safety function of the gas meter ceases to work, the gas meter can be changed to a safe state.

A gas meter power consumption management system of the present invention is a gas meter power consumption management system including: a gas meter corresponding to a consumer's place; and a center server communicable with the gas meter. The gas meter includes an acceleration sensor that detects acceleration, a communicator that communicates with the center server, a gas meter controller, and a battery that supplies electric power to the acceleration sensor, the communicator, and the gas meter controller. The gas meter controller changes, based on the acceleration detected by the acceleration sensor, from a normal mode to at least one calculation mode in which power consumption of the battery is larger than power consumption of the battery in the normal mode, and the gas meter controller transmits an integrated value of a value related to the power consumption to the center server. The center server includes a warning transmitter that outputs a warning signal when the integrated value acquired from the gas meter exceeds a predetermined assumed integrated value.

### Advantageous Effects of Invention

The present invention can provide a gas meter and a gas meter power consumption management system each of which can be prevented from becoming inoperative.

### Brief Description of Drawings

FIG. 1 is a block diagram showing a gas meter power consumption management system including a gas meter according to one embodiment of the present invention.
FIG. 2 is a block diagram showing components of the gas meter of FIG. 1.
FIG. 3 is a diagram showing a time-lapse change line of an assumed operating time of a controller and a time-lapse change line of an actual operating time of the controller.
FIG. 4 is a block diagram showing the gas meter power consumption management system according to one embodiment of the present invention.

### Description of Embodiments

Hereinafter, a gas meter and a gas meter power consumption management system according to an embodiment of the present invention will be described with reference to the drawings. The gas meter and the gas meter power consumption management system described below are merely one embodiment of the present invention. Therefore, the present invention is not limited to the following embodiments, and additions, deletions, and modifications may be made within the scope of the present invention.

### Embodiment 1

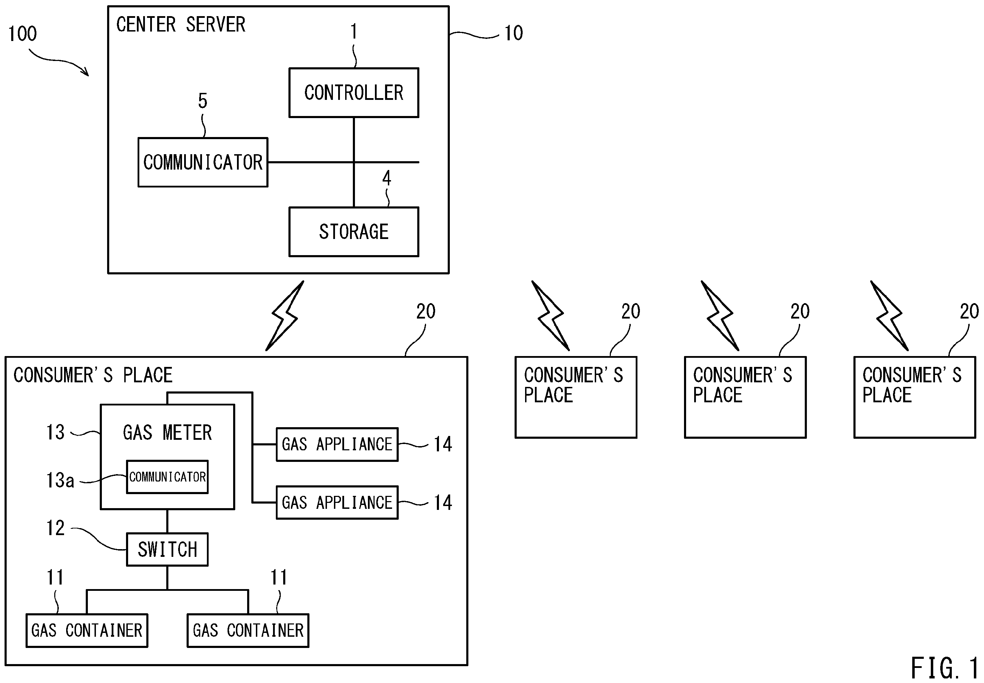

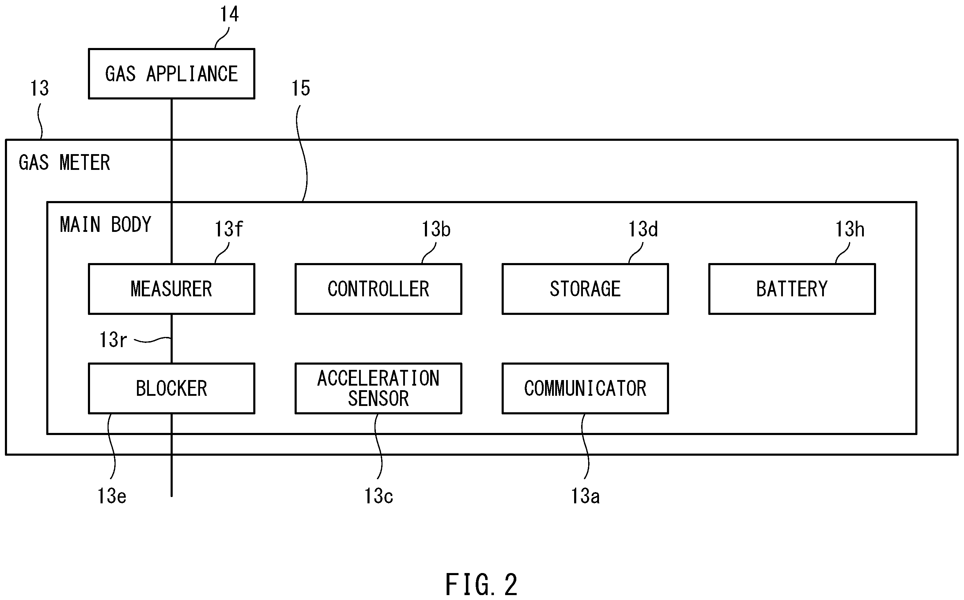

FIG. 1 is a block diagram showing a gas meter power consumption management system 100 including a gas meter 13 according to the present embodiment. FIG. 2 is a block diagram showing components of the gas meter 13 of FIG. 1.

As shown in FIG. 1, the gas meter power consumption management system 100 includes a center server 10 and consumer's places 20. FIG. 1 shows four consumer's places 20. However, in the earthquake security system 100, the number of consumer's places 20 may be plural, may be three or less, or may be five or more.

As one example, each of the consumer's places 20 includes two gas containers 11, a switch 12, the gas meter 13, and two gas appliances 14. Moreover, examples of the consumer's place 20 include a hospital, a school, a municipality facility, a nursing facility, an ordinary home, and a commercial facility. However, the consumer's place is not limited to these and may be a building that may use gas.

The gas container 11 is also called a gas bomb and is filled with gas, such as LP gas (liquefied petroleum gas). In the following description, the LP gas is simply referred to as gas. Herein, the gas is supplied from the gas container 11 to the gas appliance 14. However, the gas may be supplied to each consumer's place 20 through a conduit embedded underground. The switch 12 switches a gas supply passage such that the gas in one of the two gas containers 11 is supplied to the consumer's place 20. Thus, even when the gas in one of the two gas containers 11 runs out, the gas in the other gas container 11 may be supplied to the gas appliance 14.

The gas meter 13 includes a communicator 13a. The communicator 13a has a function of performing wireless communication with the center server 10. As a wireless communication system between the communicator 13a and the center server 10, a communication network, such as the Internet, a LAN, or a LPWA (Low Power Wide Area), can be used. The communicator 13a periodically transmits information regarding the amount of gas used in the consumer's place 20 to the center server 10 together with information regarding a date on which the gas is used, an ID that specifies the consumer's place 20, and location area information of the consumer's place 20. The communicator 13a may not be included in the gas meter 13 and may be an external slave device and communicate with the gas meter 13.

For example, each of the gas appliances 14 is a gas stove, a gas-powered water heater, a gas-powered fan heater, or the like. However, the gas appliance 14 is not limited to these and may be an appliance that consumes gas.

The center server 10 includes a controller 1, a storage 4, and a communicator 5. The controller 1 includes: a microcontroller including a CPU (Central Processing Unit) and a memory (a ROM (Read Only Memory) and a RAM (Random Access Memory)) storing a program; an ASIC (Application Specific Integrated Circuit); or the like. As the storage 4, various memories, a hard disk, and the like may be used.

As shown in FIG. 2, in addition to the communicator 13a, the gas meter 13 includes a controller 13b, an acceleration sensor 13c, a storage 13d that stores various information, a blocker 13e, a measurer 13f, a battery 13h, and a main body 15 that is a casing.

The measurer 13f is located on a channel 13r through which the gas to be supplied to the gas appliance 14 located at the consumer's place 20 flows. The measurer 13f measures the flow rate of the gas to be supplied from the gas container 11 through the channel 13r to the gas appliance 14. To be specific, the measurer 13f measures the amount of gas used in the consumer's place 20. As one example, the measurer 13f may be an ultrasonic flow meter which measures the flow rate from a propagation velocity of ultrasound in a pipeline through which the gas flows.

The blocker 13e switches the channel 13r from an open state where the gas is allowed to flow through the channel 13r to a closed state where the flow of the gas in the channel 13r is blocked. The battery 13h supplies electric power to the communicator 13a, the controller 13b, the acceleration sensor 13c, the storage 13d, the blocker 13e, and the measurer 13f.

The acceleration sensor 13c is, for example, a known sensor using a piezoelectric element. The acceleration sensor 13c is located in the main body 15. Specifically, for example, the acceleration sensor 13c is located on a control board that is a printed wiring board located in the main body 15. For example, when vibrations occur, the acceleration sensor 13c detects acceleration of acceleration axes that are three axes orthogonal to each other.

The storage 13d prestores an assumed integrated operating time and a threshold which are compared with an actual operating time of the controller 13b. The assumed integrated operating time and the threshold will be described later.

The controller 13b receives the acceleration detected by the acceleration sensor 13c. When the acceleration detected by the acceleration sensor 13c is the threshold or more, the controller 13b changes from a normal mode to at least one calculation mode. In the present embodiment, the number of calculation modes may be plural. The controller 13b calculates an earthquake index value based on the acceleration in the calculation mode. As the earthquake index value, the controller 13b can calculate various values by which the scales of earthquakes can be compared with each other, such as a SI (Spectral Intensity) value, seismic intensity, magnitude, amplitude, and displacement, which are generally used as numerical values indicating the degree of damage of a building. The power consumption of the battery 13h in the calculation mode is larger than the power consumption of the battery 13h in the normal mode.

When an integrated value of the operating time of the controller 13b in the calculation mode exceeds the assumed integrated operating time stored in the storage 13d, the controller 13b outputs a warning signal. Hereinafter, details will be described with reference to the drawings.

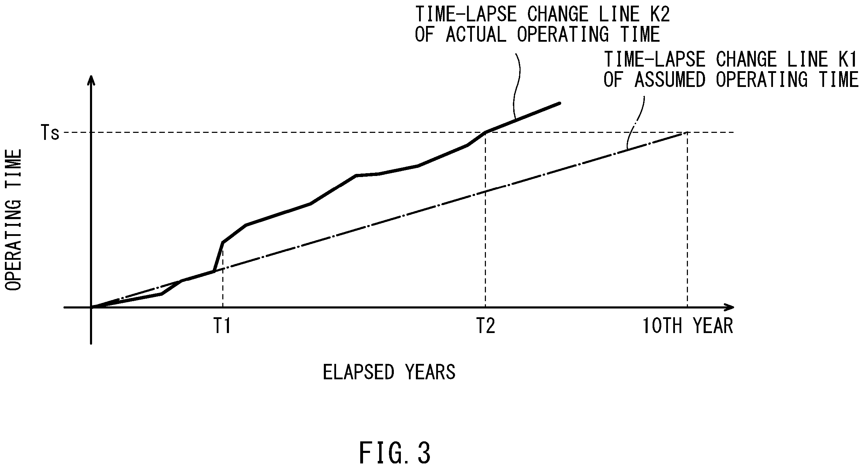

FIG. 3 is a diagram showing a time-lapse change line K1 of the assumed operating time of the controller 13b and a time-lapse change line K2 of the actual operating time of the controller 13b. As shown in FIG. 3, the time-lapse change line K1 of the assumed operating time represents the assumed operating time of the controller 13b with respect to elapsed years.

The time-lapse change line K1 of the assumed operating time is set such that when, for example, ten years have elapsed since the start of the use of the gas meter 13, the assumed operating time of the controller 13b reaches a threshold Ts.

The controller 13b measures the operating time of the controller 13b in the calculation mode. When the integrated value of the operating time of the controller 13b in the calculation mode on the time-lapse change line K2 exceeds the assumed integrated operating time stored in the storage 13d, the controller 13b outputs the warning signal. In FIG. 3, the controller 13b outputs the warning signal at a time T1. The warning signal may be transmitted to the center server 10 or may be transmitted to a gas supplier.

The controller 13b outputs the warning signal at a time T2 at which the integrated value of the operating time of the controller 13b in the calculation mode has reached the threshold Ts stored in the storage 13d. The warning signal may be transmitted to the center server 10 or may be transmitted to the gas supplier. Or, the controller 13b switches the channel 13r from the open state to the closed state by the blocker 13e at the time T2.

In a case where the controller 13b changes from the normal mode to the calculation modes when the acceleration detected by the acceleration sensor 13c is a threshold or more, the controller 13b executes the following processing. To be specific, the controller 13b integrates the operating time of the controller 13b in each calculation mode. Then, when an integrated corresponding time obtained by weighting of the integrated operating time in one calculation mode exceeds an assumed integrated value, the controller 13b executes warning or the like in each calculation mode. The weighting may be, for example, a ratio of the power consumption in each calculation mode.

The threshold Ts stored in the storage 13d may be a fixed value or may be a variable. When the threshold Ts is a variable, the threshold Ts can be changed based on, for example, the number of times of communication with an outside, such as the center server 10.

As described above, according to the gas meter 13 of the present embodiment, when the acceleration detected by the acceleration sensor 13c is a predetermined value or more, the normal mode is changed to the calculation mode, and the earthquake index value is calculated based on the acceleration in the calculation mode. The power consumption in the calculation mode is larger than that in the normal mode. When the acceleration detected by the acceleration sensor 13c often becomes the predetermined value or more by many noises caused due to, for example, vibrations generated when an automobile, a train, or the like passes, the number of times of the change to the calculation mode increases. However, according to the gas meter 13, when the integrated value of the operating time of the controller 13b in the calculation mode exceeds the assumed integrated operating time, the warning signal is output to the center server 10. Therefore, the center server 10 can find at an early stage the gas meter 13 in which the power consumption is large, and therefore, the battery is likely to run out at an early timing in the future. Thus, the battery of the gas meter 13 can be prevented from unexpectedly running out, and the gas meter 13 can be prevented from becoming inoperative.

### Embodiment 2

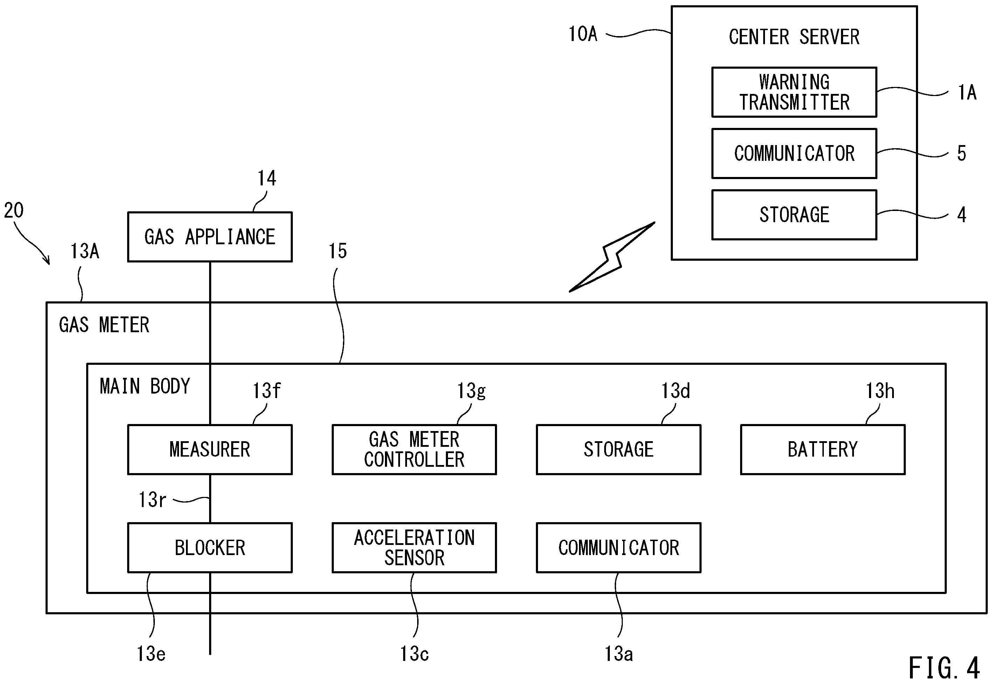

FIG. 4 is a block diagram showing a gas meter power consumption management system 100A according to the present embodiment. The gas meter power consumption management system 100A according to Embodiment 2 is basically the same as Embodiment 1 but is different from Embodiment 1 in that the center server 10 compares the integrated value of the operating time of the controller 13b in the calculation mode with the assumed integrated operating time. In Embodiment 2, the same reference signs are used for the same components as Embodiment 1, and explanations thereof are omitted except for a case where special mention is required.

As shown in FIG. 4, the gas meter power consumption management system 100A includes a center server 10A and the consumer's places 20. A gas meter 13A is located at each consumer's place 20. The gas meter 13A includes a gas meter controller 13g.

The gas meter controller 13g receives the acceleration detected by the acceleration sensor 13c. When the acceleration detected by the acceleration sensor 13c is a threshold or more, the gas meter controller 13g changes from the normal mode to the calculation mode. The gas meter controller 13g calculates the earthquake index value based on the acceleration in the calculation mode.

The gas meter controller 13g measures the operating time of the gas meter controller 13g in the calculation mode. The gas meter controller 13g transmits to the center server 10A the integrated value of the operating time of the gas meter controller 13g in the calculation mode.

The center server 10A includes a warning transmitter 1A, the storage 4, and the communicator 5. The storage 4 prestores the assumed integrated operating time and the threshold which are compared with the actual operating time of the gas meter controller 13g of the gas meter 13A.

The warning transmitter 1A acquires the integrated value of the operating time from the gas meter 13A through the communicator 5. When the acquired integrated value of the operating time exceeds the assumed integrated operating time stored in the storage 4, the warning transmitter 1A outputs a warning signal. This warning signal is transmitted to the gas supplier.

Moreover, when the integrated value of the operating time of the gas meter controller 13g in the calculation mode reaches the threshold stored in the storage 4, the warning transmitter 1A outputs the warning signal to the gas supplier. Or, when the integrated value of the operating time of the gas meter controller 13g reaches the threshold, the warning transmitter 1A informs the gas meter 13A that the channel 13r should be switched from the open state to the closed state by the blocker 13e.

In the gas meter power consumption management system 100A of the present embodiment, when the integrated value of the operating time of the gas meter controller 13g in the calculation mode exceeds the assumed integrated operating time, the center server 10A outputs the warning signal to the gas supplier. Therefore, the gas supplier can find at an early stage the gas meter 13 in which the power consumption of the battery 13h is large, and therefore, the battery is likely to run out at an early timing in the future. Thus, the battery of the gas meter 13A can be prevented from unexpectedly running out, and the gas meter 13A can be prevented from becoming inoperative.

### Modified Examples

The present invention is not limited to the above embodiments, and various modifications may be made within the scope of the present invention. Examples will be described below.

In the above embodiment, the integrated value of the operating time of the controller 13b in the calculation mode is used as an integrated value of a value related to the power consumption of the battery 13h. However, the above embodiment is not limited to this. For example, current consumption of the controller 13b in the calculation mode may be used as the integrated value of the value related to the power consumption of the battery 13h.

Moreover, in the above embodiment, two gas containers 11 and two gas appliances 14 are described. However, the above embodiment is not limited to this. The number of gas containers 11 may be one or may be three or more, and the number of gas appliances 14 may be one or may be three or more.

Moreover, in the above embodiment, the gas container 11 is filled with the LP gas (liquefied petroleum gas) that is one example of the gas. However, the above embodiment is not limited to this. The gas container 11 may be filled with another gas, such as oxygen.

### Reference Signs List

- 10: center server
- 13: gas meter
- 13a: communicator
- 13b: controller
- 13c: acceleration sensor
- 13d: storage
- 13e: blocker
- 13f: measurer
- 13g: gas meter controller
- 13h: battery
- 20: consumer's place
- 100, 100A: gas meter power consumption management system

## Claims

1. A gas meter located at each of consumer's places,
the gas meter comprising:
an acceleration sensor that detects acceleration;
a controller; and
a battery that supplies electric power to the acceleration sensor and the controller, wherein:
based on the acceleration detected by the acceleration sensor, the controller changes from a normal mode to at least one calculation mode in which power consumption of the battery is larger than power consumption of the battery in the normal mode; and
when an integrated value of a value related to the power consumption exceeds a predetermined assumed integrated value, the controller outputs a warning signal.

2. The gas meter according to claim 1, wherein when an integrated value of an operating time of the controller in the at least one calculation mode as the integrated value exceeds a predetermined assumed integrated operating time as the assumed integrated value, the controller outputs the warning signal.

3. The gas meter according to claim 2, further comprising:
a measurer that is located on a channel through which gas to be supplied to a gas appliance located at the consumer's place flows, the measurer measuring a flow rate of the gas flowing through the channel;
a blocker that switches the channel from an open state where the gas is allowed to flow through the channel to a closed state where the flow of the gas in the channel is blocked; and
a storage that stores a threshold of the integrated value of the operating time of the controller, wherein
when the integrated value of the operating time of the controller in the calculation mode reaches the threshold, the controller outputs the warning signal or switches the channel from the open state to the closed state by the blocker.

4. A gas meter power consumption management system comprising:
a gas meter corresponding to a consumer's place; and
a center server communicable with the gas meter, wherein:
the gas meter includes
an acceleration sensor that detects acceleration,
a communicator that communicates with the center server,
a gas meter controller, and
a battery that supplies electric power to the acceleration sensor, the communicator, and the gas meter controller;
the gas meter controller changes, based on the acceleration detected by the acceleration sensor, from a normal mode to at least one calculation mode in which power consumption of the battery is larger than power consumption of the battery in the normal mode, and the gas meter controller transmits an integrated value of a value related to the power consumption to the center server; and
the center server includes
a warning transmitter that outputs a warning signal when the integrated value acquired from the gas meter exceeds a predetermined assumed integrated value.
